# EUROPEAN PATENT APPLICATION

(11) **EP 2 773 080 A1**
(43) Date of publication of application: **03.09.2014**
(21) Application number: 12844577.2
(22) Date of filing: 20.09.2012
(51) Int. Cl.: H04L 29/08

(54) **SHARING CONTROL SYSTEM AND METHOD FOR NETWORK RESOURCES DOWNLOAD INFORMATION**

(30) Priority: 26.10.2011 CN 201110329358
(71) Applicant: Tencent Technology (Shenzhen) Co., Ltd, Guangdong 518044 (CN)
(72) Inventor: LIU, Gang, Shenzhen, Guangdong 518044 (CN); LI, Xiaokang, Shenzhen, Guangdong 518044 (CN); HUANG, Yan, Shenzhen, Guangdong 518044 (CN)
(74) Representative: Epping - Hermann - Fischer
(86) International application number: PCT/CN2012/081642
(87) International publication number: WO 2013/060210

(57) **Abstract**

Disclosed in the present invention are a sharing control system and method for network resources download information. The system comprises: microblog sharing interface server, sharing resources database, and transfer server. The method comprises: receiving indication of sharing network resources and obtaining the unique identifier of the network resources by the microblog sharing interface server; generating the download link entry address and posting it to the microblog; storing the unique identifier of the network resources in the sharing resources database; determining by the transit server whether to allow downloading the network resources based on the corresponded download control conditions, which are inquired from the sharing resources database according to the unique identifier of the clicked download link entry address; reversed calculating the unique identifier to get the source download link address of the network resources when downloading the network resources is allowed; sending the source download link address to the client that clicks the download link entry address. With the present invention, the risk of transmission of the network resources download information can be effectively controlled.

## Description

### FIELD OF THE INVENTION

The present invention relates to the field of network data communication technology, and in particular to a sharing control system and method for network resource download information.

### BACKGROUND OF THE INVENTION

Network resources are generally referred to digital resources which are stored in the network and are provided for netizen to download and use, including program files, video files, audio files and so on. Currently, usual ways for downloading network resources are as follows.

(1) Peer to Server (P2S) technology. All the network resources are stored in the servers of a certain large-scale downloading website, and users directly download resource files from the downloading website. Speed of the download way may be ensured, but resources are dispersed and are not easy to be searched.

(2) Peer to Peer (P2P) technology, also referred to as an equipotent technology. The technology depends on computing capacity and bandwidth of a device of a network resource download participant, rather than only depends on the several servers. The P2P technology is widely applied in sharing a file and downloading a file. In the P2P technology, downloading speed of one terminal is closely related to uploading speed of opposite terminal. Since most of the Chinese users use ADSL for internet access, the uploading speed of the ADSL is not high and is merely dozens of Kbps, and some users may purposely restrict the uploading speed, resulting in lacking for the uploading bandwidth resources in the case of the P2P technology. Therefore, users usually feel that speed of the P2P technology is low.

(3) Peer to Server & Peer (P2SP) technology. In this technology, unlike the conventional way, the downloading no longer only depends on the server, and content may be spread among the various terminal machines in the network. Besides the P2P, the P2SP further includes a server, that is the "S" of the P2SP. The P2SP effectively integrates the originally isolated servers, mirror resources of the servers, and P2P resources together. Compared with the conventional P2P or P2S technology, the downloading stability and downloading speed of the P2SP technology are greatly improved. The P2SP technology is based on user to server mechanism and user to user mechanism, and is different from the P2P technology and the P2S technology. The P2SP technology supports the P2P technology, and further integrates the server resources and the P2P resources together through a searching database. The P2SP searches other resources automatically and selects a suitable resource for accelerating, when the user downloads a file. Therefore, the downloading stability and the downloading speed of the P2SP are greatly improved compared with the conventional P2P technology.

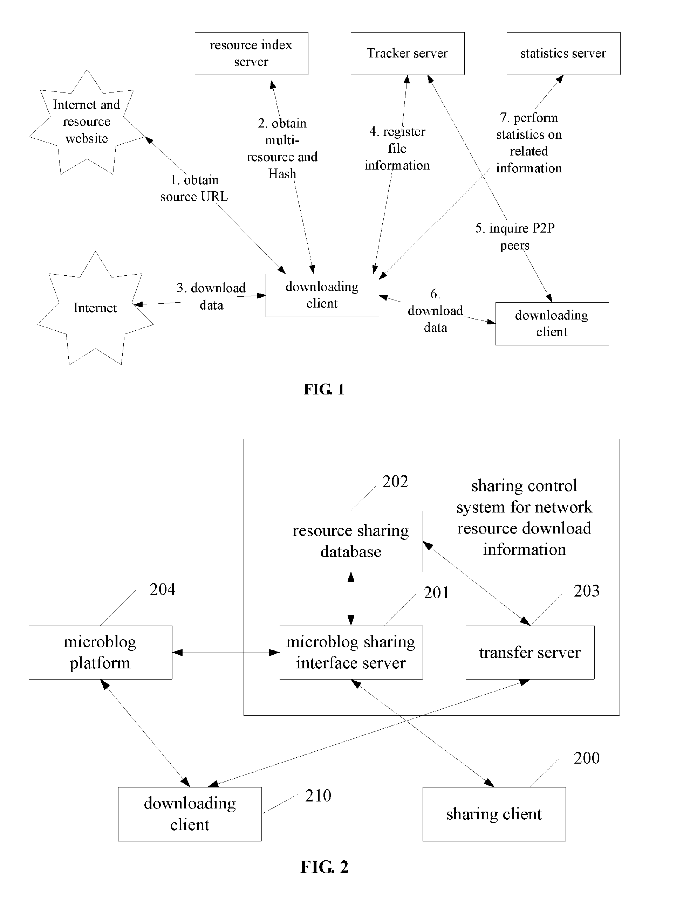

In the P2SP technology, when a network resource file is downloaded, data sources include a source download link, a P2P network, and an auxiliary source of a third party mirror. The file is connected in serials integrally through a unique identifier for the integral file, such as a unique identifier acquired by calculating according to Message Digest Algorithm Version 5 (MD5) or Secure Hash Algorithm (SHA). Figure 1 is a particular control flow chart of sharing and downloading of a network resource in the existing P2SP technology. Referring to Figure 1, the network of the P2SP includes a downloading client, a resource index server, a Tracker server, and a statistics server.

The downloading client is mainly used for: (11) reporting an online condition and information of a resource possessed locally to the Tracker server periodically; (12) inquiring of a resource index server via source URL a multi-resource URL collection, HASH and file check information, and downloading data from a URL collection source; (13) inquiring of the Tracker server a peer simultaneously; (14) after the downloading task is finished, reporting downloading time, downloading speed, a downloading result and file size of the downloading task, downloading source link, and downloading speed and downloading time acquired by different URL sources to the statistics server; (15) performing check when downloading of data fragments are finished in a downloading process, and reporting to the statistics server if a data fragment is found to be wrong.

The resource index server is mainly used for: (21) receiving HASH of a entry inquiring file using URL as an index from the client; (22) receiving the multi-URL resource collection of entry inquiring downloading which uses the URL as an index from the client; (23) providing file fragment check information for the downloading client to check the validity of the downloaded data.

The Tracker server is used for: (31) registering each client applying to join the network, and feeding back a address list of the resource node possessed by the client; (32) receiving an online condition report of the client, generating a node list of each resource, and feeding back the node list when the task is applied by a node to be downloaded; (33) receiving a peer online control policy synchronized with a bandwidth scheduling server, and sending the peer online control policy to a peer client when the peer logins in.

The statistics server is used for: receiving a report for URL downloading speed, downloading time, connectivity, a downloading result and file size and so on about the client when the downloading is finished or is underway, and writing a log file so as to perform statistical analysis in the future.

Referring to Figure 1, in the P2SP network, the flow chart of the downloading of a network resource mainly includes the following steps. (1) The user acquires an original URL link from the Internet or a resource website when the user needs to download a network resource; (2) the user uses the original URL link as an entry and inquires of a resource index server the multi-resource URL collection and HASH value of a file; (3) the downloading client downloads data from the inquired URL; (4) file information is registered into the Tracker server when the downloading is finished; (5) other client may inquire of the Tracker server P2P peers, that is, a peer in the case where the downloading is finished and a peer in the case where the downloading is underway; (6) other downloading client starts inquiring multi-source P2P to download, so that data is exchanged among the peers; (7) related statistical information is reported to the statistics server when the downloading is finished.

In any one of the downloading technologies described above, the main problem is to post and share download information of a network resource, i.e. a source download link address mainly, for downloading by all the users. Currently, the download information of the network resource is mainly shared and posted in several ways as follows.
(a) The download information of the network resource is directly posted in the downloading website or network forum, and a downloading user may acquire the source download link address of the network resource from the downloading website or network forum;
(b) a receiving user transfers and shares the source download link address for downloading the network resource through various network instant communicating systems; and
(c) the source download link address of the network resource is shared by using a microblog.

The above-mentioned way in which the download information of the network resource is shared by using a microblog is the latest technology currently, and is also the latest tendency.

The microblog is referred to as a micro type blog, and is a network platform for information sharing, transferring and acquiring based on user relationship. The user may access the microblog through a wire communication network or wireless communication network and the various clients, and may update information by using a designated number of characters (for example, generally 140 characters or so) and/or other multimedia information so as to realize the instant sharing. The microblog binds media such as a mobile phone short message, a social website and a blog together, so that the connection between the microblog and the various media is strengthened and the information may be shared in a greatly wide range. The microblog is becoming to a most preferable way for information transferring for the netizens in a very fast speed and is greatly possible to change the track of information access for the network users fundamentally. Therefore, the mircoblog becomes a new entry for the users to access the website and obtain various kinds of information. Moreover, the mircoblog also becomes a new tool for a portal website to attract and retain the users.

With the fast development of the microblog, the various big platforms become open to public access or use, and this becomes a mainstream of the Internet. A microblog open platform is an open platform for information subscribing, sharing and communicating based on a microblog system. The existing user spread system of the microblog is very complete, and a fissioned-type spread is achieved by sharing large amount of information between good friends. The platform provides a sharing button and a dynamic show plug-in, so that a cooperation system party may add a microblog social feature to its website by means of merely several lines of HTML code. Moreover, the shared content may be shown in the microblog website, and the related contents may be obtained directly when the user clicks the link. The contents which may be shared and downloaded in the microblog are becoming more and more, and large amounts of API interfaces are provided so as to help the cooperation system party to realize more features. Currently, many users like to share new network resources onto the microblog platform.

In view of the above-mentioned characteristics of the microblog, the microblog has currently become an important platform for sharing and transferring network resource download information.

However, the existing way in which the network resource download information is shared by using the microblog has the following disadvantages.

Currently, the various application programming interfaces (API) posted by the microblog make large amounts of users to be able to update microblog information through a mobile phone, a network and so on, and the information may be spread quickly. This facilitates the downloading and transferring of a network resource having illegal content. However, currently, the existing way in which the network resource download information is shared by using the microblog does not control the risk of spreading of the download information, can not audit and trace the download information of the network resource, and can not control the sharing and transferring of illegal information.

### SUMMARY OF THE INVENTION

In view of the above, the main object of the present invention is to provide a sharing control system and method for network resource download information, thereby effectively controlling the risk of spreading of the network resource download information.

The technical solutions of the present invention are achieved as follows.

A sharing control system for network resource download information, includes:

a microblog sharing interface server, configured to receive an instruction for sharing a network resource from a client, acquire a unique identifier calculated from the source download link address of the network resource; generate a corresponding download link entry address that carries the unique identifier and points to a transfer server, and post the download link entry address into the microblog; and store the unique identifier for the network resource in a resource sharing database;

the resource sharing database, configured to store the unique identifier for the shared network resource, and set a download control condition corresponding to the network resource; and

the transfer server, configured to, in responding to a click performed on the download link entry address in the microblog, inquire the download control condition corresponding to the network resource from the resource sharing database according to the unique identifier carried by the clicked download link entry address, determine whether to allow downloading the network resource based on the download control condition, if the downloading of the network resource is allowed, perform a reverse calculation on the unique identifier to obtain the source download link address of the network resource and send the source download link address to the client where the download link entry address is clicked.

A sharing control method for network resource download information, includes:

receiving an instruction for sharing a network resource, acquiring and storing a unique identifier calculated from the source download link address of the network resource; generating a download link entry address that carries the unique identifier and corresponds to the network resource, and posting the download link entry address into the microblog; setting a download control condition corresponding to the network resource; and

after the download link entry address in the microblog is clicked, inquiring the download control condition corresponding to the network resource according to the unique identifier carried by the clicked download link entry address, determining whether to allow downloading the network resource based on the download control condition, if the downloading of the network resource is allowed, performing a reverse calculation on the unique identifier to obtain the source download link address of the network resource and sending the source download link address to the client where the download link entry address is clicked.

Compared with the prior art, in the present invention, the download link entry address rather than the source download link address by which the network resource can be directly accessed is posted in the microblog. The download control authentication may be triggered by clicking the download link entry address. The network resource may be downloaded only if the download control condition is met. Thus, the present invention can effectively control the risk of spreading of the network resource download information according to the control requirement, especially, can effectively control the risk of sharing and spreading of the illegal information.

The above explanation only is the overview of the technical solutions of the present invention, which may be implemented according to the specification in order to more clearly understand the technology means of the present invention. Moreover, to make the above and other objects, features and advantages of the present invention more obvious and easy to be understood, in the following, particular embodiments will be illustrated in detail in conjunction with the drawings.

### BRIEF DESCRIPTION OF THE DRAWINGS

Figure 1 is a particular control flowchart of sharing and downloading of a network resource in the existing P2SP technology;
Figure 2 is a configuration schematic diagram of a sharing control system for network resource download information according to the present invention; and
Figure 3 is a configuration schematic diagram in the case where the sharing control system for network resource download information according to the present invention is applied in a P2SP download platform.

### DETAILED DESCRIPTION OF THE INVENTION

To further set forth the technology means and efficacy for the invention to achieve the above-mentioned invention purpose, in the following, particular embodiments, structures, features and efficacy of the sharing control system and method for network resource download information proposed according to the invention will be illustrated in detail in conjunction with the drawings and the preferable embodiments.

The above and other technical contents, features and efficacy of the invention will be clearly presented in the following detail illustration in conjunction with the preferable embodiments shown in the drawings. By the illustration of the particular embodiments, the efficacy and technology means of the invention which are adopted for the above-mentioned purpose may be more deeply and specifically understood. However, the drawings are only for reference and illustration, not for limiting the invention.

Figure 2 is a configuration schematic diagram of an embodiment of a sharing control system for network resource download information according to the present invention. Referring to Figure 2, the sharing control system includes a microblog sharing interface server 201, a resource sharing database 202, and a transfer server 203.

The microblog sharing interface server 201 is encapsulated with a microblog sharing interface for a client to invoke. The microblog sharing interface is configured to receive an instruction for sharing a network resource from a sharing client 200, and acquire a unique identifier calculated from the source download link address of the network resource. The specific way of acquiring may be informing the sharing client 200 to calculate the unique identifier at the local of the client, or acquiring the unique identifier for the source download link address of the network resource from a resources provider. Here, for example, the client may be a browser of a computer, a a browser of a mobile phone and a browser of a tablet computer, or other client such as a microblog client and a download tool client.

The unique identifier for the source download link address of the network resource is a file ID of the network resource, also called a HASH value, which is key information in the download link. For many files, even if their filenames are different, the download platform regards the files as the same file if only their HASH values are same.

After the unique identifier for the source download link address of the network resource is acquired by the microblog sharing interface server 201, the microblog sharing interface server 201 generates a corresponding download link entry address that carries the unique identifier and points to the transfer server, posts the download link entry address into the microblog, and stores the unique identifier for the network resource in the resource sharing database.

The download link entry address needs to meet the post standard of the microblog, that is, the length of the download link entry address is less than the maximum information length allowed in the microblog (usually 140 words). Thus, the success rate of posting the network resource download information by using microblog may be greatly improved. Moreover, the specific sharing content and the resource description and the source download link address may be provided on a transfer page, thereby the problem that 140 words in the microblog can not achieve sufficient expressiveness is solved.

The resource sharing database 202 is configured to store the information of the shared network resource, in which the unique identifier for the network resource at least is included and the description information related to the network resource may be further included; and further store the download control condition corresponding to the network resource.

The transfer server 203 is configured to, respond to a click performed on the download link entry address in the microblog (that is, when the download link entry address is browsed in the microblog by a user via with a local browse of the downloading client 210, the user clicks the download link entry address, then the click request may be diverted to the transfer server 203); inquire the download control condition corresponding to the network resource from the resource sharing database 202 according to the unique identifier carried by the clicked download link entry address; determine whether to allow downloading the network resource based on the download control condition, if the downloading of the network resource is allowed, perform a reverse calculation on the unique identifier to obtain the source download link address of the network resource and send the source download link address to the client where the download link entry address is clicked.

There are two ways for sending the source download link address in the present invention. One way is redirection, that is, the transfer server 203 does not generate a transfer page, and directly sends the redirected source download link address to the click client. The click client may directly download the network resource by using a tool such as the browser, also may invoke a special client download tool to directly download the network resource. The other way is that the transfer server 203 further generates a transfer page, on which the source download link address is displayed, and sends the transfer page to the client where the download link entry address is clicked. The user may further click the source download link address on the transfer page and download the network resource by the browser or the corresponding download tool.

In another embodiment, the microblog sharing interface of the microblog sharing interface server 201 may be further configured to receive the description information related to the shared network resource from the sharing client 200 (such as the information of the title, text description or picture description of the network resource); store the description information related to the network resource in the resource sharing database, and bind the description information with the unique identifier for the network resource. If the description information related to the network resource is further stored in the resource sharing database 202, the transfer server is further configured to inquire the description information related to the network resource from the resource sharing database according to the unique identifier carried by the clicked download link entry address, generate the transfer page that includes the source download link address and the related description information, and send the transfer page to the client where the download link entry address is clicked. The user may further click the source download link address on the transfer page and download the network resource by the browser or the corresponding download tool.

The present invention focuses on solving the sharing control for network resource download information, and does not specifically limit the download way for the network resource. The download ways of P2S, P2P, P2SP and the like may be applied to download the network resource. The difference as to these download ways is as follows. If the network resource is downloaded by the download way of P2S, the source download link address thereof generally is the direct download address of the network resource (such as a video file). If the network resource is downloaded by the download way of P2P or P2SP, the source download link address thereof generally is the direct download address of a peer file (such as a BT peer file or an emule peer file which are commonly used in the industry at present). After acquiring the address of the peer file, the downloading client acquires a corresponding URL address by a corresponding download tool to download the network resource.

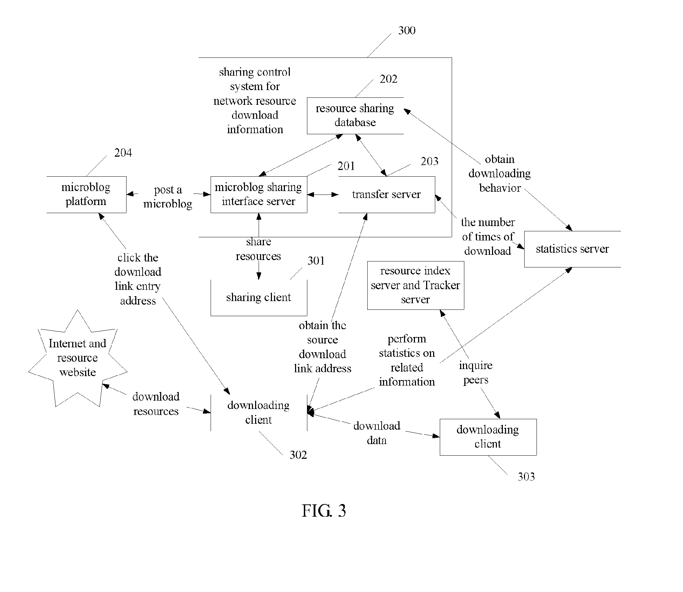

The present invention is further described by using an embodiment which takes the case of application in the P2SP download network as an example. Figure 3 is a configuration schematic diagram in the case where the sharing control system for network resource download information according to the present invention is applied in the P2SP download platform. Referring to Figure 3, the P2SP network includes a downloading client, a resource index server, a Tracker server and a statistics server. The sharing control system of the invention includes the microblog sharing interface server 201, the resource sharing database 202 and the transfer server 203. A sharing client 301 may be a downloading client. The downloading client may invoke the interface of the microblog sharing interface server 201 to share the download information, so it is called the sharing client herein. Certainly, the sharing client 301 also may be a browser that accesses a certain resource sharing website. The resource sharing website may invoke the interface of the microblog sharing interface server 201 to sharing the download information. The downloading client may acquire the download link entry address from the microblog platform, and download the corresponding network resource file by means of the source download link address URL sent from the transfer server 203. If the URL supports the redirection, the network resource is downloaded from the redirected file.

Referring to Figure 3, the present invention adds the sharing control system for network resource download information according to the invention to the original P2SP download platform, thereby seamlessly integrating the original P2SP download platform with the microblog platform together, so that they play their respective advantages.

In the following, taking the application shown in Figure 3 as an example, the sharing control method for network resource download information according to the invention which is performed by the sharing control system is illustrated.

The sharing control method for network resource download information according to the presnet invention mainly includes the following steps.

A sharing control system 300 receives an instruction for sharing a network resource from the sharing client 301, obatins and stores a unique identifier calculated from the source download link address of the network resource; generates the download link entry address that carries the unique identifier and corresponds to the network resource, and posts the download link entry address into the microblog; and sets the download control condition corresponding to the network resource.

After the download link entry address in the microblog is clicked, the sharing control system 300 obtains the download control condition corresponding to the network resource according to the unique identifier carried by the clicked download link entry address, determines whether to allow downloading the network resource based on the download control condition, if the downloading of the network resource is allowed, performs a reverse calculation on the unique identifier to obtain the source download link address of the network resource and sends the source download link address to the client where the download link entry address is clicked.

In the following, the detailed processes and more embodiments of the method will be described specifically.

Referring to Figure 3, the sharing client 301 may invoke the interface of the microblog sharing interface server 201 after or at the same time when the network resource is downloaded, so as to issue an instruction for sharing a certain network resource (such as a video file) to the microblog sharing interface server 201.

After receiving the instruction for sharing a network resource, the microblog sharing interface server 201 obtains a unique identifier calculated from the source download link address of the network resource. Herein, the unique identifier is the HASH value of the source download link address. The interface commands the sharing client 301 to search the source download link address of the network resource, by which the HASH value thereof may be calculated. The HASH value is uploaded to the microblog sharing interface server 201. After obtaining the HASH value of the network resource, the microblog sharing interface server 201 stores the HASH value in the resource sharing database 202, and sets a download control condition corresponding to the network resource in the resource sharing database 202 by the operation interface of the resource sharing database 202. The microblog sharing interface server 201 also generates the download link entry address that carries the HASH value and corresponds to the network resource, and posts the download link entry address onto the microblog platform 204. Herein, specifically, the microblog sharing interface may prompt the sharing client 301 to input the microblog account and password, and verify the microblog account and password. After the verification is passed, the microblog sharing interface may post the download link entry address into the microblog article corresponding to the microblog account.

By the time, the operations for sharing the network resource are finished. The next is the download control processes.

After the download link entry address is posted onto the microblog platform, the user of the downloading client 302 may browse the corresponding microblog article by using a tool such as a browser and click the download link entry address therein. Since the download link entry address points to the transfer server 203, after the download link entry address in the mircoblog is clicked, the transfer server 203 may obtain the HASH value carried by the download link entry address. The transfer server 203 inquires the download control condition corresponding to the network resource from the resource sharing database 202 according to the HASH value. The transfer server 203 determines whether to allow downloading the network resource based on the download control condition, if the downloading of the network resource is allowed, performs a reverse calculation on the HASH value to obtain the source download link address of the network resource and sends the source download link address to the client 302 where the download link entry address is clicked.

The main object of the present invention is to effectively control the risk of spreading of the network resource download information as the control requirement. There are various kinds of embodiments for setting the download control condition and performing the download control. In the following, four kinds thereof are introduced mainly, other specific download control conditions and control ways may be set by the administrator himself/herself as required.

### First download control embodiment

The setting of the download control condition corresponding to the network resource comprises: setting effective time corresponding to the network resource; and, when the sharing client 301 shares the network resource, the microblog sharing interface needs to generate a timestamp and store the timestamp bound with the unique identifier for the shared network resource so as to be stored in the resource sharing database 202. After the download link entry address is clicked, the determining of whether to allow downloading the network resource based on the download control condition comprises: inquiring the timestamp and the effective time corresponding to the unique identifier for the network resource from the resource sharing database 202, determining whether the current time exceeds the effective time corresponding to the network resource, that is, whether the current time subtracting the timestamp is longer than the effective time corresponding to the network resource, if the current time subtracting the timestamp is longer than the effective time corresponding to the network resource, the download is not allowed; otherwise, the download is allowed.

### Second download control embodiment

In the P2SP platform shown in Figure 3, the statistics server is configured to receive the report of information such as URL downloading speed, downloading time, connected situation, a downloading result and file size about the client when the downloading is finished or is underway, and write a log file for the subsequent statistics analysis, for example, to count the actual number of times of the download of the same network resource.

The setting of the download control condition corresponding to the network resource comprises: setting the maximum number of times of download corresponding to the network resource. After the download link entry address is clicked, the determining of whether to allow downloading the network resource based on the download control condition comprises the following steps: the transfer server 203 acquires the actual number of times of download of the network resource from a statistics server, inquires the maximum number of times of download corresponding to the unique identifier for the network resource from the resource sharing database 202, and determines whether the actual number of times of download of the network resource is larger than the maximum number of times of download corresponding to the network resource, if the actual number of times of download of the network resource is larger than the maximum number of times of download corresponding to the network resource, the download is not allowed; otherwise, the download is allowed.

### Third download control embodiment

The setting of the download control condition corresponding to the network resource comprises: obtaining a microblog account of a network resource sharer by using microblog sharing interface, and binding the microblog account with the unique identifier for the network resource so as to be stored in the resource sharing database 202; setting a relation chain condition between a microblog account that is allowed to download the network resource and the microblog account of the sharer. For example, the relation chain condition may be that the microblog account of the download user must be a "follower" of the microblog account of the sharer. The "follower" means that the "follower" may instantly see what the "being followed user" posts as long as the "being followed user" posts a microblog.

After the download link entry address is clicked, the determining of whether to allow downloading the network resource based on the download control condition comprises: obtaining the microblog account of the user who clicks the download link entry address and its relation chain information from a microblog platform by the microblog sharing interface server 201, determining whether this microblog account and the microblog account of the sharer meet the relation chain condition set as the download control condition, if this microblog account and the microblog account of the sharer meet the relation chain condition set as the download control condition, the download is allowed; otherwise, the download is not allowed.

### Fourth download control embodiment

When the sharing client 301 shares the network resource, the microblog sharing interface needs to further calculate authentication check code of the shared network resource, posts the download link entry address that includes the authentication check code into the microblog, and store the authentication check code in the download control condition corresponding to the network resource;

After the download link entry address in the microblog is clicked, the determining of whether to allow downloading the network resource based on the download control condition comprises: obtaining the authentication check code in the clicked download link entry address, comparing the authentication check code in the clicked download link entry address with the authentication check code corresponding to the unique identifier for the network resource which is inquired from the resource sharing database 202, if the authentication check code in the clicked download link entry address consists with the authentication check code corresponding to the unique identifier for the network resource which is inquired from the resource sharing database 202, the download is allowed; otherwise, the download is not allowed.

There are two ways for the transfer server 203 to send the source download link address. One way is redirection, that is, the transfer server 203 does not generate a transfer page, and directly sends the redirected source download link address to the downloading client 302. The downloading client 302 may directly download the network resource by using a tools such a the browser, also may invoke a special client download tool to directly download the network resource (for example, in the embodiment shown in Figure 3, the special P2SP client may be invoked for downloading). The other way is that the transfer server 203 further generates a transfer page, on which the source download link address is displayed, and sends the transfer page to the client 302 where the download link entry address is clicked. The user may further click the source download link address on the transfer page and download the network resource by the browser or the corresponding P2SP client.

In an embodiment, the interface of the microblog sharing interface server 201 may be further configured to receive the description information related to the shared network resource from the sharing client 301 (such as the information of the title, text description or picture description of the network resource), store the description information related to the network resource in the resource sharing database 202, and bind the description information with the unique identifier for the network resource. If the description information related to the network resource is further stored in the resource sharing database 202, the transfer server 203 is further configured to inquire the description information related to the network resource from the resource sharing database 202 according to the unique identifier carried by the clicked download link entry address, generate a transfer page that includes the source download link address and the related description information, and send the transfer page to the client 302 where the download link entry address is clicked. The user may further click the source download link address on the transfer page and download the network resource by the browser or the corresponding P2SP client.

In the case of the embodiment shown in Figure 3, the downloading client 302 may inquire multi-resource URL collection and HASH value of a file from the resource index server by using the P2SP client with the acquired source download link address as a entry, then download date from the URL collection source (the path includes Internet, a resource website and other peer client), and register information of the file into the Tracker server. Other downloading client 303 may inquire P2P peers, namely a peer in the case where the downloaded is finished and a peer in the case where the download is underway, by Tracker server. The downloading client 303 begins to inquire multisource P2P peers, exchange the download data among the peers, thereby achieving the sharing download in P2SP.

In the P2SP platform shown in Figure 3, the statistics server may record downloading behavior of the user, for example, receive the report of information such as URL downloading speed, downloading time, connected situation, a downloading result and file size about the client when the downloading is finished or is underway, and write a log file for the subsequent statistics analysis, and synchronize the information such as a title and download fever of a related file to which the microblog downloaded by the user links and P2SP account of the downloading client to the resource sharing database 202. Thus, in another embodiment of the present invention, the resource sharing database 202 may communicate with the statistics server, obtain the downloading behavior record of the user who clicks the download link entry address (herein, the P2SP account of the downloading client 302) from the statistics server. The transfer server 203 further obtains the P2SP account from the downloading client 302 before generating a transfer page. The transfer server 203 inquires the downloading behavior record of the account from the resource sharing database 202 based on the account, and generates a recommended content for the user based on the downloading behavior record, and then generates a transfer page and sends the transfer page to the downloading client 302. On the transfer page, the source download link address and the related description information of the network resource and the recommended content are included. The generating of recommended content for the user based on the downloading behavior record of the user, for example, may include: analysing a resource category which is most often downloaded by a user in the downloading behavior record. For example, a certain user may download mostly resources of a movie category, then the movie network resource download information of the same category may be abtained from a certain resource database (such as a cooperative resource website) based on the resource category, and the network resource download information of the movie category is taken as the recommended content. By the content recommending mechanism, the transformation efficiency of content on the transfer page may be improved.

In the present invention, the download link entry address rather than the source download link address by which the network resource can be directly accessed is posted in the microblog. The download control authentication may be triggered by clicking the download link entry address. The network resource may be downloaded only if the download control condition is met. Thus, the present invention can effectively control the risk of spreading of the network resource download information according to the control requirement, especially, can effectively control the risk of sharing and spreading of the illegal information.

Furthermore, the original object of the microblog is a micro type blog, so the length of the posted content is strictly limited. For example, currently, the length of each microblog usually is limited within 140 words, which is equivalent to the capacity of two short messages. The length limit is decided by the Mobile Communication Standards, that is to say, according to the international standards. Each short message sends the content containing 1120 bits, i.e. 140 bytes, at most. Thus the microblog system sets said upper limit. However, currently, the number of words of the source download link of many network resources is larger than 140 bytes, and generally the download information also contains some description information of the network resource. If the download information is shared by the microblog, many source download link contents whose length are larger than the length limited by the microblog can not be shared successfully, since the microblog limits the length of the posted content. Thereby, the success rate for posting the network resource download information by using the microblog may be lower. Moreover, due to the words limit in the microblog, the microblog can not achieve sufficient expressiveness as for the network resource. However, in the present invention, the download link entry address needs to meet the posting standard of the microblog, that is, the length of the download link entry address is less than the maximum information posting length allowed in the microblog. In this way, the success rate for posting the network resource download information by using the microblog may be greatly improved. Moreover, the specific sharing content and the resource description and the source download link address may be provided on a transfer page, thereby the problem that 140 words on the microblog can not achieve sufficient expressiveness is solved.

The above are only the embodiments of the invention and are not to limit the invention in any form. Though the present invention is disclosed by way of the embodiments as described above, those embodiments are not intended to limit the invention. Some modifications and equivalents can be made to the technical solution of the present invention by those skilled in the art in light of the technical content disclosed above without deviation from the scope of the present invention. Therefore, any simple change, equivalent alternation and modification made to the above embodiments according to the technical principle of the present invention without deviation from the scope of the present invention all fall within the scope of protection of the technical solution of the present invention.

### Industrial Applicability

In the present invention, the download link entry address rather than the source download link address by which the network resource can be directly accessed is posted in the microblog. The download control authentication may be triggered by clicking the download link entry address. The network resource may be downloaded only if the download control condition is met. Thus, the present invention can effectively control the risk of spreading of the network resource download information according to the control requirement, especially, can effectively control the risk of sharing and spreading of the illegal information.

## Claims

1. A sharing control system for network resource download information, comprising:
a microblog sharing interface server, configured to receive an instruction for sharing a network resource from a client, obtain a unique identifier calculated from a source download link address of the network resource; generate a corresponding download link entry address that carries the unique identifier and points to a transfer server, and post the download link entry address into a microblog; and store the unique identifier for the network resource in a resource sharing database;
the resource sharing database, configured to store the unique identifier for the shared network resource, and set a download control condition corresponding to the network resource; and
the transfer server, configured to, respond to a click performed on the download link entry address in the microblog, inquire the download control condition corresponding to the network resource from the resource sharing database according to the unique identifier carried by the clicked download link entry address, determine whether to allow downloading the network resource based on the download control condition, perform a reverse calculation on the unique identifier to obtain the source download link address of the network resource and send the source download link address to the client where the download link entry address is clicked, if the downloading of the network resource is allowed.

2. The system according to claim 1, wherein the transfer server is further configured to generate a transfer page, on which the source download link address is displayed, and send the transfer page to the client where the download link entry address is clicked.

3. The system according to claim 2, wherein the microblog sharing interface server is further configured to receive description information related to the shared network resource from the client, and store the description information related to the network resource in the resource sharing database;
the transfer server is further configured to inquire the description information related to the network resource from the resource sharing database according to the unique identifier carried by the clicked download link entry address, generate the transfer page that comprises the source download link address and the related description information, and send the transfer page to the client where the download link entry address is clicked.

4. A sharing control method for network resource download information, comprising:
receiving an instruction for sharing a network resource, obtaining and storing a unique identifier calculated from a source download link address of the network resource; generating a download link entry address that carries the unique identifier and corresponds to the network resource, and posting the download link entry address into a microblog; setting a download control condition corresponding to the network resource; and
after the download link entry address in the microblog is clicked, inquiring the download control condition corresponding to the network resource according to the unique identifier carried by the clicked download link entry address, determining whether to allow downloading the network resource based on the download control condition, performing a reverse calculation on the unique identifier to obtain the source download link address of the network resource and sending the source download link address to the client where the download link entry address is clicked, if the downloading of the network resource is allowed.

5. The method according to claim 4, wherein after the source download link address of the network resource is obtained by performing the calculation on the unique identifier for the network source, a transfer page is further generated, in which the source download link address is comprised, and the transfer page is sent to the client where the download link entry address is clicked.

6. The method according to claim 5, wherein after the instruction for sharing a network resource is received, the method further comprises: obtaining and storing the description information related to the network resource; and further comprising the description information related to the network resource on the transfer page.

7. The method according to claim 5, wherein the method further comprises: obtaining a downloading behavior record of a user who clicks the download link entry address from a statistics server, generating a recommended content for the user based on the downloading behavior record, and further comprising the recommended content on the transfer page.

8. The method according to claim 4, wherein the setting a download control condition corresponding to the network resource comprises: setting effective time corresponding to the network resource; and
after the download link entry address is clicked, the determining whether to allow downloading the network resource based on the download control condition comprises: determining whether current time exceeds the effective time corresponding to the network resource, if the current time exceeds than the effective time corresponding to the network resource, the download is not allowed; otherwise, the download is allowed.

9. The method according to claim 4, wherein the setting a download control condition corresponding to the network resource comprises: setting the maximum number of times of download corresponding to the network resource; and
after the download link entry address is clicked, the determining whether to allow downloading the network resource based on the download control condition comprises: obtaining the actual number of times of the download of the network resource from a statistics server, determining whether the actual number of times of download of the network resource is larger than the maximum number of times of download corresponding to the network resource, if the actual number of times of download of the network resource is larger than the maximum number of times of download corresponding to the network resource, the download is not allowed; otherwise, the download is allowed.

10. The method according to claim 4, wherein the setting a download control condition corresponding to the network resource comprises: obtaining and storing a microblog account of a network resource sharer, setting a relation chain condition between a microblog account that is allowed to download the network resource and the microblog account of the sharer; and
after the download link entry address is clicked, the determining whether to allow downloading the network resource based on the download control condition comprises: obtaining the microblog account of the user who clicks the download link entry address and its relation chain information from a microblog system, determining whether the microblog account and the microblog account of the sharer meet the relation chain condition set as the download control condition, if this microblog account and the microblog account of the sharer meet the relation chain condition set as the download control condition, the download is allowed; otherwise, the download is not allowed.

11. The method according to claim 4, wherein the method further calculates authentication check code of the shared network resource, posts the download link entry address that comprises the authentication check code into the microblog, and stores the authentication check code in the download control condition;
after the download link entry address in the microblog is clicked, the determining whether to allow downloading the network resource based on the download control condition comprises: obtaining the authentication check code in the clicked download link entry address, comparing the authentication check code in the clicked download link entry address with the authentication check code of the network resource which is stored in the download control condition, if the authentication check code in the clicked download link entry address consists with the authentication check code of the network resource which is stored in the download control condition, the download is allowed; otherwise, the download is not allowed.

12. The method according to claim 4, wherein the length of the download link entry address is less than the maximum information posting length allowed in the microblog.
